# EUROPÄISCHE PATENTANMELDUNG

(11) **EP 1 092 495 A1**
(43) Veröffentlichungstag der Anmeldung: **18.04.2001**
(21) Anmeldenummer: 99119963.9
(22) Anmeldetag: 12.10.1999
(51) Int. Cl.: B23F 23/12

(54) **Maschine zum Wälzschleifen von Zahnrädern mit einer Zahnradmessvorrichtung**

(71) Anmelder: THE GLEASON WORKS, Rochester New York 14692-2970 (US)
(72) Erfinder: Huber, Karl, 81825 München (DE); Schäferling, Karl, 85716 Unterschleissheim (DE)
(74) Vertreter: Stahl, Gerhard F.W.

(57) **Zusammenfassung**

Die Erfinding betrifft eine Maschine zum Schleifen von Zahnrädern, umfassend einen Maschinenständer (1), einen auf dem Maschinenständer linear hin und her bewegbar gelagerten Wälzschlitten (2), eine auf dem Wälzschlitten drehbar gelagerte Werkstückspindel (4), deren Drehachse zu der Linearbewegung des Wälzschlittens rechtwinklig ist, eine Antriebseinrichtung (7) für die Drehbewegung der Werkstückspindel und der Linearbewegung des Wälzschlittens, eine Schleifscheibe (19) und Antriebseinrichtungen zum Verdrehen und zum Zustellen der Schleifscheibe. Mit dem Maschinenständer ist ein Meßtaster (3) zu einer Bewegung in zwei Richtungen verbunden, von denen die erste zur Drehachse der Werkstückspindel (4) und zur Achse der Linearbewegung des Wälzschlittens (2) rechtwinklig ist und die zweite zur Drehachse der Werkstückspindel parallel und zur Achse der Linearbewegung des Wälzschlittens rechtwinklig ist.

## Beschreibung

Die Erfindung betrifft eine Maschine zum Schleifen von Zahnrädern, umfassend einen Maschinenständer, einen auf dem Maschinenständer linear und hin und her bewegbar gelagerten Wälzschlitten, eine auf dem Wälzschlitten drehbar gelagerte Werkstückspindel, deren Drehachse zu der Linearbewegung des Wälzschlittens rechtwinklig ist, eine Antriebseinrichtung für die Drehbewegung und die Linearbewegung des Wälzschlittens, wobei diese Bewegungen in einem zur Erzeugung einer Evolventenverzahnung erforderlichen Verhältnis stehen, eine Schleifscheibe, die in Richtung ihrer Drehachse zustellbar ist, und Antriebseinrichtungen zum Verdrehen und zum Zustellen der Schleifscheibe.

Eine Maschine dieser Gattung ist in der DE 37 17 078 C1 beschrieben. Beim Schleifen von Zahnrädern, insbesondere Schabrädern, auf einer derartigen Maschine werden generell entsprechend der durchgeführten Vorberechnung alle Maschinenachsen automatisch in die zur Generierung der Zahnflanke erforderlichen Positionen verfahren, und die Schleifscheibe wird automatisch entsprechend den vorgegebenen Korrekturen abgerichtet. Nach dem manuellen Einmitten und Positionieren des Schabrades auf der Werkstückspindel beginnt der Schleifvorgang. Es werden in der Regel 1 bis 3 sogenannte Probezähne geschliffen. Nach jedem Probezahnschliff wird das Schabrad abgespannt und in einem Meßraum auf einer getrennten Meßmaschine vermessen. Im Vergleich des Soll- und des Istzustandes werden Korrekturwerte gebildet. Diese Korrekturwerte werden der Maschine übermittelt, woraufhin automatisch entsprechende Korrekturen an den Maschineneinstellungen erfolgen. Während des Meßvorgangs und beim Warten zum Messen gibt es einen Maschinenstillstand, der Auf- und Abspannvorgang des Schabrades wiederholt sich, was mit einem entsprechenden Zeitverlust verbunden ist. Darüber hinaus werden Aufspannfehler wirksam.

Der Erfindung liegt die Aufgabe zugrunde, die gattungsgemäße Maschine dahingehend weiterzubilden, daß der Auf- und Abspannvorgang des bearbeiteten Zahnrades zum Vermessen desselben entfallen kann.

Erfindungsgemäß wird diese Aufgabe dadurch gelöst, daß mit dem Maschinenständer ein Meßtaster zu einer Bewegung in zwei Richtungen verbunden ist, von denen die erste zur Drehachse der Werkstückspindel und zur Achse der Linearbewegung des Wälzschlittens rechtwinklig ist und die zweite zur Drehachse der Werkstückspindel parallel und zur Achse der Linearbewegung des Wälzschlittens rechtwinklig ist.

Die Erfindung macht von der Tatsache Gebrauch, daß die in einer getrennten Meßmaschine durchgeführten Bewegungen des Zahnrades auch in der Schleifmaschine selbst durchführbar sind. Damit können Wartezeiten vermieden werden, die Auf- und Abspannvorgänge für das Messen entfallen, die Stillstandzeit wird produktiv genutzt, und es wird Maschinenkapazität frei.

Die beiden Freiheitsgrade des Meßtasters lassen sich auf konstruktiv einfache Weise verwirklichen, indem der Meßtaster über einen Kreuzschlitten mit dem Maschinenständer verbunden ist. Bei einer besonders vorteilhaften Ausführungsform ist vorgesehen, daß ein erster Schlitten mit dem Maschinenständer zu einer Bewegung in der ersten Richtung beweglich verbunden ist, und daß ein den Meßtaster tragender zweiter Schlitten mit dem ersten Schlitten zu einer Bewegung in der zweiten Richtung beweglich verbunden ist. Bei einer zweckmäßigen Weiterbildung der Erfindung ist vorgesehen, daß den beiden Kreuzschlitten Antriebseinrichtungen zugeordnet sind, die mit einer Programmsteuerung zur automatischen Durchführung der gewünschten Messungen ansteuerbar sind.

Ein bevorzugtes Ausführungsbeispiel der Erfindung ist in der Zeichnung dargestellt und wird nachfolgend näher erläutert. Es zeigt:
Fig. 1 eine Darstellung zur Erläuterung der Kontaktbedingungen einer Evolvente mit einer Ebene und einer Kugel,
Fig. 2 eine schematische Darstellung einer Zahnrad-Schleifmaschine,
Fig. 3 eine perspektivische Darstellung eines Bereichs der Zahnrad-Schleifmaschine in der die Lage der Koordinaten der Maschine dargestellt ist,
Fig. 4 eine Vorderansicht eines Teilbereichs der Schleifmaschine, in dem der Meßvorgang durchgeführt wird.
Fig. 5 eine Seitenansicht des Teilbereichs nach Fig. 4 und
Fig. 6 eine Draufsicht auf den Teilbereich nach Fig. 4.

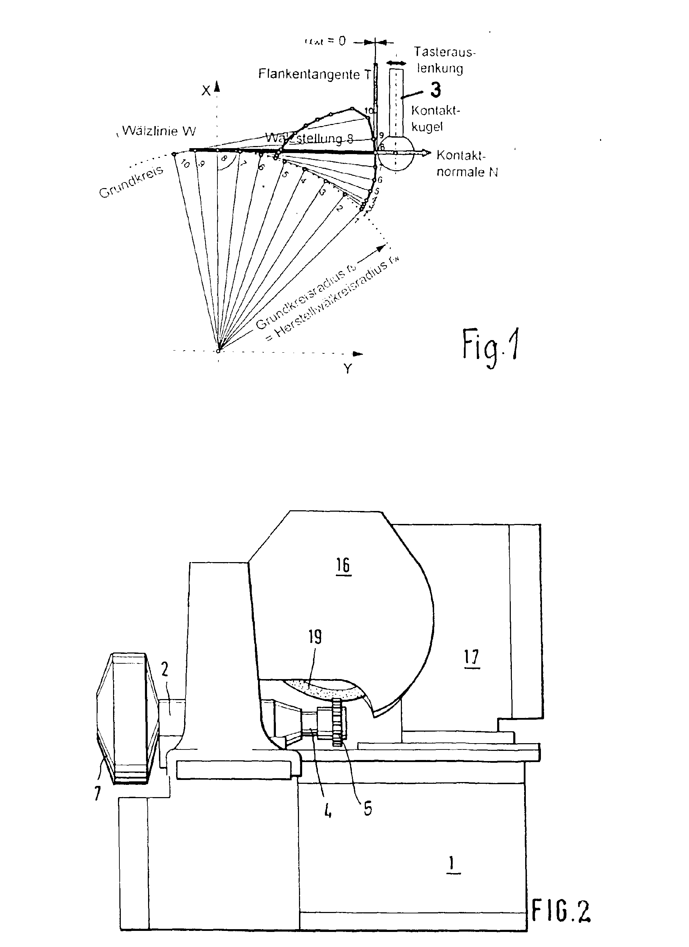

Die kinematischen Bedingungen der Evolventenerzeugung gehen aus Fig. 1 hervor. In diesem Fall ist der Grundkreisradius r_{b} und der Herstellwälzkreisradius r_{w} gleich groß. Der Grundkreisradius r_{b} wälzt direkt auf der Wälzlinie W. Die gesamte Evolventenlänge von Punkt 1 bis 10 wird von einem einzigen Punkt der Flankentangente T erzeugt, der in Fig. 1 momentan beim Evolventenpunkt 8 liegt.

Für das Messen der Evolvente mit einem kugelförmigen, pilzförmigen oder schneidenförmigen Taster 3 bietet diese Methode der Evolventengenerierung den Vorteil, daß die Richtung F der Auslenkung des Tasters für jeden Stirneingriffswinkel der verschiedenen zu messenden Verzahnungen gleich bleibt und somit die Kinematik und die Einstellung der Meßeinrichtung vereinfacht werden, was die erzielbare Genauigkeit erhöht.

Die Auslenkung des Tasters 3 für die Messung der Abweichungen von der idealen Evolvente erfolgt in Richtung der Flankennormalen N. Diese Flankennormale N wiederum liegt in Richtung der Eingriffslinie, die mit der Wälzlinie W identisch ist. Da die Eingriffslinien beim Schleifen und beim Messen identisch sind, bedeutet dies, daß Abweichungen von der Idealen Evolvente unmittelbar als Längenabweichungen entlang der Eingriffslinie interpretierbar sind.

In Fig. 2 ist eine Zahnradschleifmaschine schematisch in der Vorderansicht dargestellt. Auf einem Maschinenständer 1 ist ein Wälzschlitten 2 in einer geeigneten Führung senkrecht zur Zeichenebene (Fig. 2) hin und her gehend verschiebbar und hierzu antreibbar gelagert. Auf dem Wälzschlitten 2 ist quer zu dessen Bewegungsrichtung eine bekannte und daher nicht ausführlich gezeichnete Werkstückspindel 4 gelagert. Die Werkstückspindel 4 ist demzufolge zusammen mit dem Wälzschlitten 2 quer zu ihrer Achse hin und her gehend verschiebbar angeordnet. An einem Ende ist die Werksstückspindel 4 mit einer an sich bekannten Drehantriebseinrichtung 7, von der in Fig. 2 nur das Gehäuse gezeigt ist, gekuppelt. An dem von der Drehantriebseinrichtung 7 abgewendeten Ende der Werkstückspindel 4 kann ein Werkstück 5, bei dem sich um ein hochgenau zu schleifendes Zahnrad oder dergleichen, z. B. ein Schabrad oder ein Lehrzahnrad handelt, aufgespannt werden. Eine Schleifscheibe 19 kann zum Bearbeiten einer Zahnflanke in eine Zahnlücke des Werkstücks 5 in Eingriff gebracht werden. Die Schleifscheibe 19 ist in einem Schleifspindelstock 16 höhenverstellbar angeordnet, der seinerseits mit einem Schleifbock 17 schwenkbar verbunden ist. Durch Verändern der Neigung der Schleifscheibe 19 kann deren Eingriffswinkel mit den Werkstückzähnen eingestellt werden. Der Schleifbock 17 kann seinerseits auf dem Maschinenständer 1 auf den gewünschten Schrägungswinkel der Werkstückzähne eingestellt werden.

Zur Erzeugung einer Evolventenverzahnung müssen die Linearbewegung und die Drehbewegung der Werkstückspindel 4 in einem bestimmen Verhältnis stehen.

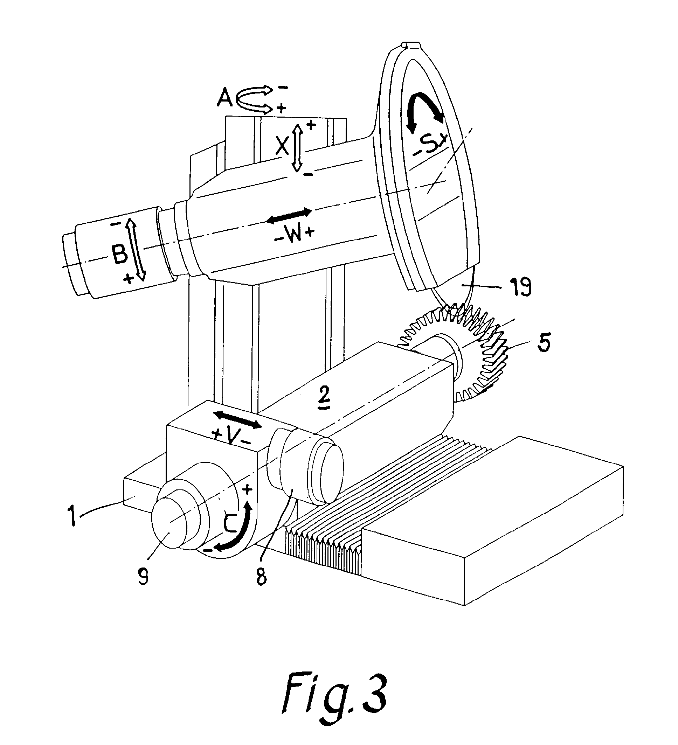

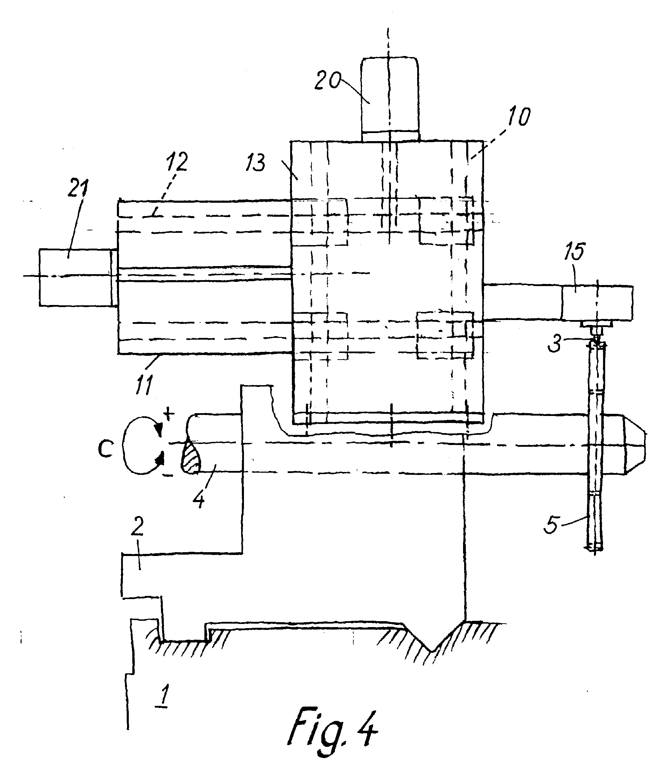

Diese Bedingung kann beispielsweise mit einem Rollband-Wälzantrieb verwirklicht werden, wie er in der DE 37 17 078 C1 beschrieben ist. Bei modernen Zahnrad-Schleifmaschinen wird häufig eine sogenannte elektronische Zwangslaufeinrichtung angewendet. Dabei sind, wie in Fig. 3 gezeigt, für die Linearbewegung des Wälzschlittens 2 und für die Drehbewegung der Werkstückspindel 4 zwei getrennte Motoren 8 und 9 vorgesehen, die elektronisch miteinander verknüpft sind, so daß das erforderliche Verhältnis der beiden Bewegungen der Werkstückspindel 4 erhalten wird. In Fig. 3 sind die verschiedenen Arbeitsachsen der Schleifmaschine dargestellt. Dabei ist mit C die Wälz-Teilbewegung, mit S die Schleifscheibendrehung, mit V die Wälzschlittenbewegung und mit W die Schleifscheiben-Zustellung bezeichnet. Der Aufbau der in Fig. 3 gezeigten Schleifmaschine ist grundsätzlich bekannt, weshalb sich eine nähere Erläuterung erübrigt. Die Verbesserung der bekannten Schleifmaschine besteht darin, daß die Meßeinrichtung mit dem Taster 3 in die Maschine integriert ist, wie dies in den Fig. 4, 5 und 6 gezeigt ist.

Auf der Bedienseite der Schleifmaschine ist der Maschinenständer 1 mit vertikalen Führungen 10 für einen Vertikalschlitten 11 versehen. Der Vertikalschlitten 11 ist mit horizontalen Führungen 12 für einen Horizontalschlitten 13 versehen. Der Horizontalschlitten 13 weist einen Auslegerarm 14 auf, der am freien Ende einen Meßkopf 15 mit einem Taster 3 trägt. Der Meßkopf 15 entspricht in seinem grundsätzlichen Aufbau dem Meßkopf, wie er in einer herkömmlichen von der Schleifmaschine getrennten Meßmaschine verwendet wird, weshalb eine nähere Erläuterung entbehrlich ist. Am Maschinenständer 1 ist ein Servomotor 20 angebracht, der über einen Kugelgewindetrieb mit dem Vertikalschlitten 11 gekuppelt ist. Am Vertikalschlitten 11 ist ein zweiter Servomotor 21 angebracht, der über einen Kugelgewindetrieb mit dem Horizontalschlitten 13 gekuppelt ist. Die beiden Servomotoren 20 und 21 sind mit einer (nicht gezeigten) Programmsteuerung zur automatischen Durchführung der gewünschten Messungen ansteuerbar.

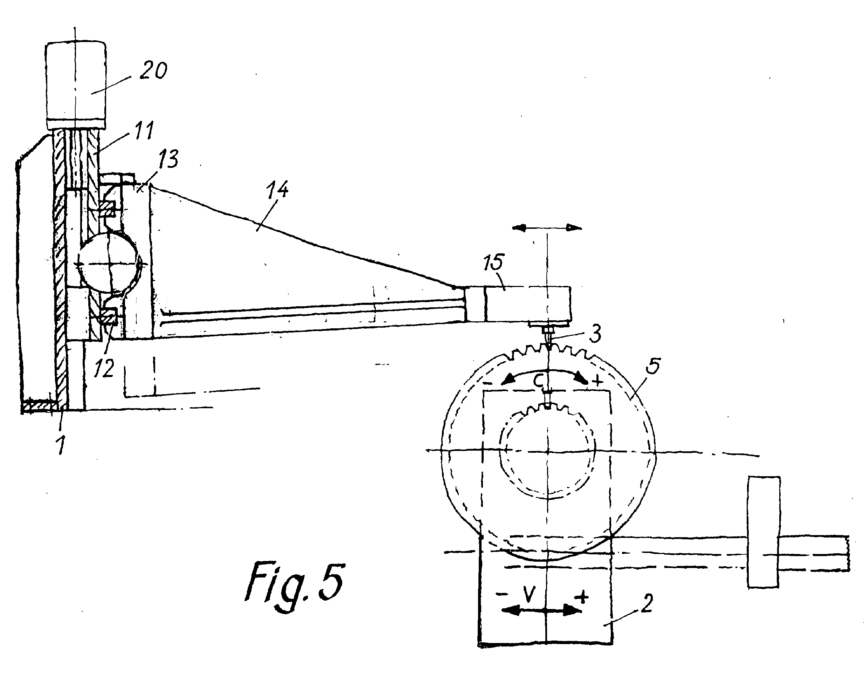

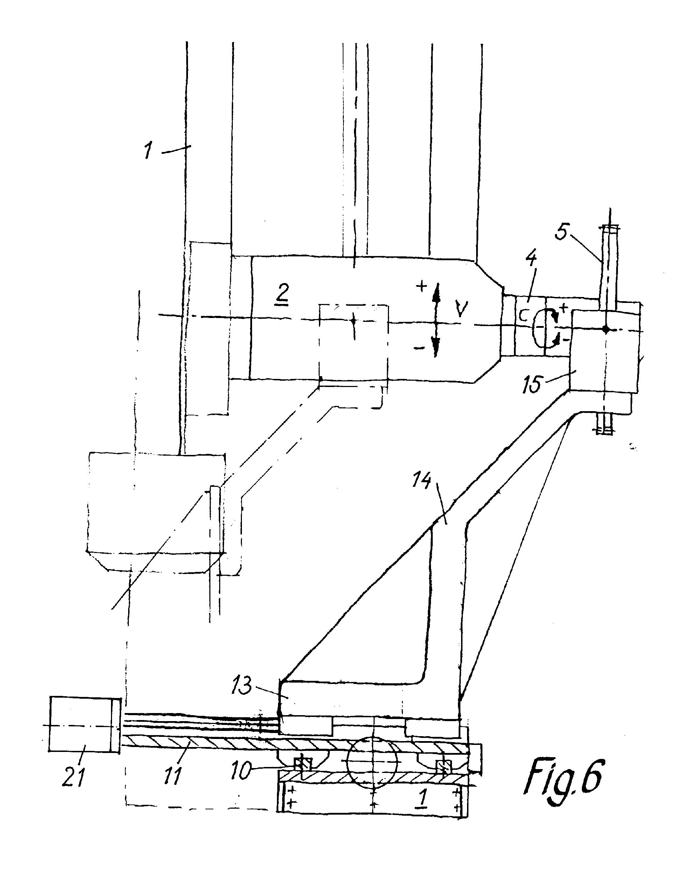

Wenn das auf die Werkstückspindel 4 aufgespannte Zahnrad 5 vermessen werden soll, dann wird es mit der Schleifscheibe 19 außer Eingriff gebracht, und der Wälzschlitten 2 wird von der Schleifscheibe 19 zur Bedienseite hin verfahren. Daraufhin wird der Meßkopf 15 aus seiner in Fig. 6 mit strichpunktieren Linien angedeuteten Ruhestellung in die mit durchgezogenen Linien gezeigte Arbeitsstellung bewegt. Zu diesem Zweck wird der Horizontalschlitten 13 mit dem zugeordneten Servomotor 21 gegenüber dem Vertikalschlitten 11 verfahren. Daraufhin wird der Vertikalschlitten 11 mit dem zugeordneten Servomotor 20 gegenüber dem Maschinenständer 1 nach unten verfahren, um den Taster 3 mit einer Zahnlücke des Zahnrades 5 in Eingriff zu bringen, wie dies in Fig. 5 gezeigt ist. Die Eingriffsstellung des Tasters 3 entspricht dabei der Eingriffsstellung der Schleifscheibe 19. Grundsätzlich ist aber auch eine Anordnung möglich, bei der die Eingriffsstellung des Tasters 3 zu der Eingriffsstellung des Schleifrades 19 um 180° versetzt ist. In der Eingriffsstellung des Tasters 3 werden die gleiche Linearbewegung des Wälzschlittens 2 und die gleiche Drehbewegung der Werkstückspindel 4 durchgeführt, wie sie vorher in der Eingriffsstellung der Schleifscheibe 19 zur Generierung der Evolventenverzahnung durchgeführt wurden. Bei dieser kombinierten translatorischen und rotatorischen Bewegung des Zahnrades 5 gleitet die Kugel des Tasters 3 an der Zahnflanke. Falls die Zahnflanke von der idealen Evolvente abweicht, dann wird die Kontaktkugel und damit der Taster 3 in Richtung der Kontaktnormalen N ausgelenkt, wie dies in Fig. 1 gezeigt ist. Diese Auslenkung des Tasters 3 wird im Meßkopf 15 erfaßt, und durch einen Vergleich der Soll- und Istwerte werden entsprechende Korrekturwerte gebildet. Diese Korrekturwerte werden der Steuerung der Schleifmaschine übermittelt, woraufhin automatisch Korrekturen an den Maschineneinstellungen erfolgen. Nach erfolgtem Meßvorgang wird der Taster 3 mit dem Zahnrad 5 außer Eingriff gebracht, und der Horizontalschlitten 13 wird in seine Ruhestellung verfahren. Daraufhin wird der Wälzschlitten 2 in die Ausgangsstellung verfahren, und die Schleifscheibe 19 wird erneut mit dem Zahnrad 5 in Eingriff gebracht. Der Schleifvorgang wird sodann mit den korrigierten Maschineneinstellungen fortgesetzt.

Abweichend von der gezeigten Ausführungsform könnte der Maschinenständer 1 mit horizontalen Führungen für einen Horizontalschlitten versehen sein, und der Horizontalschlitten könnte mit vertikalen Führungen für einen den Taster tragenden Vertikalschlitten versehen sein.

### Bezugszeichenliste:

- 1: Maschinenständer
- 2: Wälzschlitten
- 3: Taster
- 4: Werkstückspindel
- 5: Werkstück
- 7: Drehantriebseinrichtung
- 8: Motor für 2
- 9: Motor für 4
- 10: vertikale Führungen
- 11: Vertikalschlitten
- 12: horizontale Führungen
- 13: Horizontalschlitten
- 14: Auslegerarm
- 15: Meßkopf
- 16: Schleifspindelstock
- 17: Schleifbock
- 19: Schleifscheibe
- 20: Servomotor für 11
- 21: Servomotor für 13

## Patentansprüche

1. Maschine zum Schleifen von Zahnrädern, umfassend einen Maschinenständer, einen auf dem Maschinenständer linear hin und her bewegbar gelagerten Wälzschlitten, eine auf dem Wälzschlitten drehbar gelagerte Werkstückspindel, deren Drehachse zu der Linearbewegung des Wälzschlittens rechtwinklig ist, eine Antriebseinrichtung für die Drehbewegung der Werkstückspindel und die Linearbewegung des Wälzschlittens, wobei diese Bewegungen in einem zur Erzeugung einer Evolventenverzahnung erforderlichen Verhältnis stehen, eine Schleifscheibe, die in Richtung ihrer Drehachse zustellbar ist, und Antriebseinrichtungen zum Verdrehen und Zustellen der Schleifscheibe, dadurch **gekennzeichnet**, daß mit dem Maschinenständer (1) ein Meßtaster (3) zu einer Bewegung in zwei Richtungen verbunden ist, von denen die erste zur Drehachse (C) der Werkstückspindel (4) und zur Achse (V) der Linearbewegung des Wälzschlittens (2) rechtwinklig ist und die zweite zur Drehachse (C) der Werkstückspindel (4) parallel und zur Achse (V) der Liniearbewegung des Wälzschlittens (2) rechtwinklig ist.

2. Maschine nach Anspruch 1, dadurch **gekennzeichnet**, daß der Meßtaster (3) über einen Kreuzschlitten (11, 13) mit dem Maschinenständer (1) verbunden ist.

3. Maschine nach Anspruch 2, dadurch **gekennzeichnet**, daß ein erster Schlitten (11) mit dem Maschinenständer (1) zu einer Bewegung in der ersten Richtung beweglich verbunden ist, und daß ein den Meßtaster (3) tragender zweiter Schlitten (13) mit dem ersten Schlitten (11) zu einer Bewegung in der zweiten Richtung beweglich verbunden ist.

4. Maschine nach Anspruch 2 oder 3, dadurch **gekennzeichnet**, daß dem Kreuzschlitten (11, 13) Antriebseinrichtungen (20, 21) zugeordnet sind, die mit einer Programmsteuerung zur automatischen Durchführung der gewünschten Messungen ansteuerbar sind.
